# EUROPÄISCHE PATENTSCHRIFT

(11) **EP 0 760 766 B1**
(45) Veröffentlichungstag und Bekanntmachung des Hinweises auf die Patenterteilung: **07.01.1998**
(21) Anmeldenummer: 95920897.6
(22) Anmeldetag: 26.05.1995
(51) Int. Cl.: B60T 13/72

(54) **Bremskraftverstärker**
Brake booster
Servofrein

(30) Priorität: 26.05.1994 DE 4418444
(43) Veröffentlichungstag der Anmeldung: 12.03.1997
(73) Patentinhaber: LUCAS INDUSTRIES PUBLIC LIMITED COMPANY, Solihull, West Midlands B91 3TX (GB)
(72) Erfinder: SCHLÜTER, Peter, D-56206 Kammerforst (DE); BORSCH, Stefan, D-56333 Winningen (DE)
(74) Vertreter: Schmidt, Steffen J., Dipl.-Ing.
(86) Internationale Anmeldenummer: EP9502007
(87) Internationale Veröffentlichungsnummer: WO9532879

(56) Entgegenhaltungen:
- EP-A- 0 530 475
- GB-A- 2 256 018

## Beschreibung

Die vorliegende Erfindung betrifft einen Bremskraftverstärker wie er aus der DE 39 18 012 A1 bekannt ist.

Der dort beschriebene Wegsensor dient dem Zweck, die Betätigungsgeschwindigkeit des Bremspedals der Bremsanlage zu ermitteln, um sie z.B. als Kriterium für die Auslösung einer elektrisch ausgelösten Notbremsung heranzuziehen.

Ein derartiger Bremskraftverstärker ist auch aus der DE 37 31 603 A1 bekannt. Bei diesem Bremskraftverstärker ist an der Innenseite der Gehäuseschale des Unterdruckverstärkers ein Wegschalter angeordnet, der ein Wegsensorglied aufweist, dessen freies Ende an der beweglichen Membranwand anliegt.

Diese Ausgestaltung ist insofern nachteilig, als die Montage und insbesondere die Justierung der Nullstellung des Wegschalters relativ aufwendig und kompliziert ist.

Aus der DE 42 11 849 A1 ist ein pneumatischer Bremskraftverstärker mit einem Verstärkergehäuse bekannt, bei dem die vordere und die hintere Wand durch achsparallele Zuganker verbunden sind, deren eines Ende aus der Gehäusewand herausragt, damit der Bremskraftverstärker am Fahrzeug befestigt werden kann.

Aus der DE 41 28 159 A1 ist eine Meßeinrichtung zur berührungsfreien Bestimmung eines Weges eines Bauteils bekannt, bei dem ein Spulenkörper zwei in einem Spannungsteiler verschaltete Spulen aufweist. Die Spulen sind mit zunehmendem Abstand der einzelnen Windungen so auf den Spulenkörper gewickelt, daß sie im stromdurchflossenen Zustand ein inhomogenes, d.h. über die Längserstreckung des Spulenkörpers sich änderndes Magnetfeld erzeugen, das mittels einer zu der Spule in radialem Abstand in Längsrichtung geführten Meßeinrichtung erfaßt wird.

Aus der WO 93/25865 A1 ist ein Positionsmeßsystem für eine Zylinder-Kolbenanordung bekannt, bei dem an der Kolbenstange eine optisch erfaßbare Skala aufgetragen ist, die durch einen entsprechenden Sensor erfaßt wird.

Ausgehend von dem vorstehend erläuterten Stand der Technik liegt der Erfindung die Aufgabe zugrunde, einen elektronisch regelbaren Bremskraftverstärker dahingehend zu verbessern, daß die Montage und die Justierung des Wegaufnehmers einfacher möglich ist.

Zur Lösung dieser Aufgabe ist der Bremskraftverstärker erfindungsgemäß durch die Merkmale des Anspruchs 1 weitergebildet.

Diese Anordnung erlaubt eine Montage und Justierung des Meßgliedes und des Wegaufnehmers von der Außenseite des Gehäuses des Bremskraftverstärkers bzw. der Arbeitskammern. Außerdem kann im Falle eines Defektes ggf. ohne eine vollständige Zerlegung des Gehäuses des Bremskraftverstärkers das jeweils schadhafte Teil ersetzt werden.

Weil der Wegaufnehmer an dem Durchlaß entweder innerhalb oder außerhalb des Gehäuses angeordnet ist, ist er sehr einfach erreichbar und kann auch leicht ausgetauscht bzw. in seiner Stellung zu dem Meßglied verändert und damit justiert werden. Insbesondere ist bei einer bevorzugten Ausführungsform der Wegaufnehmer in einem Durchlaß in der beweglichen Trennwand angeordnet.

Da der Wegaufnehmer den Durchlaß und das durch diesen ragende Meßglied zumindest teilweise umgibt, kann eine möglichst genaue Abtastung des Meßgliedes und damit eine präzise Messung der Verschiebung der beweglichen Wand zwischen den beiden Arbeitskammern erreicht werden.

Entweder weist das Meßglied Markierungen auf, die bei Bewegungen der beweglichen Wand von dem Wegaufnehmer erfaßbar sind. In diesem Fall ist der Wegaufnehmer an dem Durchlaß angeordnet. Es ist jedoch auch möglich, daß das Meßglied den Wegaufnehmer trägt, und daß im Bereich des Durchlasses Markierungen vorgesehen sind, die bei Bewegungen der beweglichen Wand von dem Wegaufnehmer erfaßbar sind.

Gemäß einer bevorzugten Ausführungsform der Erfindung ist das Meßglied durch einen Zuganker gebildet, der zur Befestigung des Bremskraftverstärkers im Fahrzeug dient. Der besondere Vorteil dieser Anordnung besteht darin, daß eine Einsparung von Teilen möglich ist, da der Zuganker zur Erfüllung zweier Zwecke herangezogen wird. Zum einen zur Halterung des Bremskraftverstärkers im Fahrzeug und zum anderen als Meßglied.

Gemäß einer anderen bevorzugten Ausführungsform der Erfindung ist das Meßglied durch eine Leitungsführung gebildet, die zur Einleitung von Leitungen, vorzugsweise elektrischen Kabeln in das Innere des Bremskraftverstärkers dient. Hier werden in analoger Weise die gleichen Vorteile erzielt. Einem Bauteil werden zwei Funktionen zugeordnet.

Es besteht auch die Möglichkeit, sowohl die Funktion des Zugankers, als auch die Funktion der Leitungseinführung in das Innere des Bremskraftverstärkers, als auch die Funktion des Meßgliedes in einem Bauteil, nämlich dem Zuganker zu vereinen. Dazu weist der Zuganker bzw. die Leitungsführung zumindest abschnittsweise einen Hohlraum auf, in dem Leitungen für Sensoren oder Aktuatoren des Bremskraftverstärkers geführt sind. durch entsprechende radiale Öffnungen entlang der Längserstreckung des Zugankers können dann die Leitungen an die jeweiligen Orte im Innern des Bremskraftverstärkers geleitet werden.

Die oben erwähnten Markierungen können auch in Form von resistiven, kapazitiven oder induktiven Bauteilen realisiert sein, die im Inneren des Zugankers bzw. der Leitungsführung angeordnet sind. Das Abtasten dieser resistiven, kapazitiven oder induktiven Bauteile kann berührungslos von der Außenseite des Zugangs bzw. der Leitungsführung erfolgen. Je nach Meß-Prinzip, das dem Wegaufnehmer zugrundeliegt, kann der Zuganker bzw. die Leitungsführung ein Bauteil sein, das die Leitungen für die Sensoren oder Aktuatoren und/oder das jeweilige vom Meß-Prinzip abhängende resistive, kapazitive oder induktive Bauteil hermetisch umschließt. Es besteht jedoch auch die Möglichkeit, in den Zuganker bzw. die Leitungsführung einen Längsschlitz einzuformen, der eine abgedichtete Durchführung von dem Wegaufnehmer zu den Markierungen ermöglicht.

Um den Unterdruck in einer der Arbeitskammer bzw. das Druckgefälle zwischen den Arbeitskammern durch die erfindungsgemäße Ausgestaltung des Zugankers bzw. der Leitungsführung nicht zu beeinträchtigen ist die Durchtrittsstelle des Zugankers bzw. der Leitungsführung durch eine Gehäusewand des Bremskraftverstärkers in die Arbeitskammer hermetisch abgedichtet sind. Es können auch die Austrittsstellen der Leitungen aus dem Zuganker bzw. der Leitungsführung im Innern des Gehäuses des Bremskraftverstärkers abgedichtet sein. Allerdings ist eine Kontrolle der Dichtheit bei einer solchen Ausführung erschwert.

Um die Durchführung des Zugankers bzw. der Leitungsführung durch die Trennwände der einzelnen Kammern zueinander bzw. durch die Wandung des Gehäuses des Bremskraftverstärkers zwar hermetisch aber axial beweglich durchzuführen, ist bei einer bevorzugten Ausführungsform der Erfindung der Zuganker bzw. die Leitungsführung von einem Dichtungselement umgeben ist.

Dieses Dichtungselement hat bevorzugt die Form eines Faltenbalges, der eine den Zuganker bzw. die Leitungsführung umschließende Dichtkante hat. Es sind jedoch auch andere Dichtungsanordnungen möglich.

Insbesondere, wenn der Zuganker bzw. die Leitungsführung die durch den Wegaufnehmer erfaßbarem Markierungen an der Innenwandung des Hohlraums aufweist, kann die äußere Mantelfläche des Zuganker bzw. der Leitungsführung vollkommen glatt und damit verschleißarm für für die Dichtkante des Dichtungselementes gestaltet werden.

Besonders geeignete Markierungen können für derartige Ausführungsformen so gestaltet sein, daß sie durch einen kapazitiven, induktiven, restistiven, optischen oder magnetfeldsensitiven Wegaufnehmer erfaßbar sind. Z. B. können an der Innenseite der Leitungsführung Magnete angeordnet sein, die mittels eines Hallsensors als Wegaufnehmer erfaßbar sind.

Es können jedoch auch an der Außenseite des Zugankers bzw. der Leitungsführung die Markierungen so glatt in die Oberfläche eingearbeitet sein, daß die Dichtkante beim Überstreichen der Markierungen nicht beschädigt wird.

Bei einer bevorzugten Ausführungsform der Erfindung ist der Bremskraftverstärker als Tandembremskraftverstärker ausgebildet ist, bei dem der Zuganker alle hintereinander angeordneten Arbeitskammern durchdringt und die beiden Arbeitskammern mit jeweils höherem Druckniveau durch einen den Zuganker umgebenden Faltenbalg pneumatisch miteinander verbunden sind. Bei einer beweglichen Wand ist der Wegaufnehmer angeordnet, der Markierungen an dem Zuganker erfaßt. Dabei umgibt der Faltenbalg auch den an der beweglichen Wand angebrachten Wegaufnehmer, der den Zuganker in radialem Abstand umgibt, und/oder an dessen Innenseite axiale Nuten als Luftdurchlaß angeordnet sind.

Weitere Eigenschaften, Ausgestaltungsmöglichkeiten und Vorteile der Erfindung werden aus der detaillierten Beschreibung der Zeichnung deutlich, in der auf die Fig. bezug genommen ist, in denen
- Fig. 1: einen Tandembremskraftverstärker einer Fahrzeugbremsanlage in einer schematischen seitlichen Schnittdarstellung zeigt;
- Fig. 2: den mit Z bezeichneten Einzelheitenausschnitt in Fig. 1 in einer schematischen seitlichen Schnittdarstellung zeigt;
- Fig. 3: einen Bremskraftverstärker einer Fahrzeugbremsanlage in einer schematischen seitlichen Schnittdarstellung zeigt;
- Fig. 3a: eine andere Ausführungsform der in Fig. 3 gezeigten Ausgestaltung der Leitungsführung zeigt;
- Fig. 4: den mit X bezeichneten Einzelheitenausschnitt in Fig. 3 in einer schematischen seitlichen Schnittdarstellung zeigt; und
- Fig. 5: den mit X bezeichneten Einzelheitenausschnitt in Fig. 3 in einer zweiten Ausführungsform in einer schematischen seitlichen Schnittdarstellung zeigt.

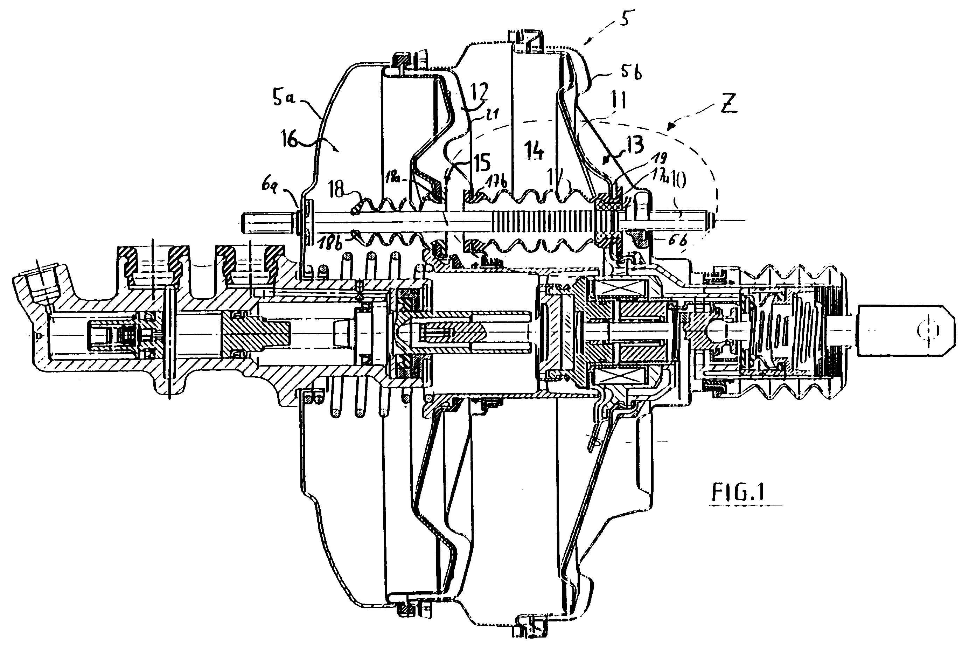

Der in Fig. 1 gezeigte Bremskraftverstärker ist als Tandembremskraftverstärker ausgestaltet. Da die Einzelheiten der Ventilanordnung und der Betätigung, sowie die übrigen Details im vorliegenden Zusammenhang nicht interessieren, werden sie der Übersicht halber nachstehend nicht im einzelnen erläutert.

Das Gehäuse 5 des Bremskraftverstärkers weist zwei durchgehende Zuganker 10 auf (von denen nur einer gezeigt ist), die die beweglichen Trennwände 11, 12 der zugehörigen Verstärkerkammern 13, 14, 15, 16 axial durchdringen. Die Zuganker 10 sind gegen die jeweiligen Verstärkerkammern 14, 16 zumindest abschnittsweise (im Fall der Arbeitskammer 16) durch Faltenbälge 17, 18 aus Gummi abgedichtet.

An den äußeren Wänden 5a, 5b des Gehäuses 5 des Bremskraftverstärkers ragen die Zuganker 10 jeweils heraus und sind von der Innenseite dieser Wände 5a, 5b her durch einen entsprechenden Absatz 6a an dem Zuganker 10 bzw. eine Mutter 6b verspannt. Durch eine Taumelverpressung wird zwischen dem Absatz 6a und der Innenseite der Wand 5a eine hermetische Abdichtung erzielt.

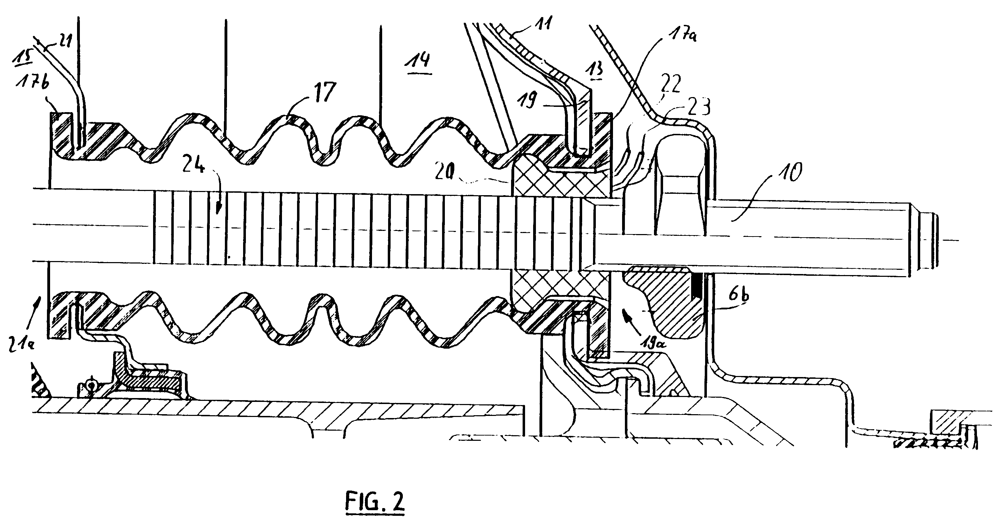

Der Faltenbalg 17 dient dazu, die beiden Arbeitskammern 13, 15 des Tandembremskraftverstärkers in einfacher Weise miteinander zu verbinden. Dazu weist die bewegliche Wand 11 eine Öffnung 19a auf, in der der Faltenbalg 17 mit einem kragenförmigen Anschlag 17a (siehe Fig. 2) aufgenommen ist. In entsprechender Weise ist das andere Ende des Faltenbalges 17 in der gegenüberliegenden Wand 21 mit dem kragenförmigen Anschlag 17b in einer entsprechenden Öffnung 21a aufgenommen. Dabei ist der Durchmesser der Öffnungen 19a, 21a und der Innenseite des Faltenbalges 17 so bemessen, daß zum einen ein Wegaufnehmer 20 in der Öffnung in der beweglichen Wand 11 innerhalb des Faltenbalges 17 Platz findet, und daß zum anderen eine pneumatische Verbindung zwischen der Arbeitskammer 13 und der Arbeitskammer 15 hergestellt ist. Das Sensorelement 21 weist dazu nicht dargestellte axiale Nuten auf.

Über Kabel 22, 23, die nach außen zu einem elektronischen Steuergerät geführt werden, kann der Wegaufnehmer 20 der Bewegung der Trennwand 11 gegenüber dem Zuganker 10 entsprechende Signale übertragen.

Dazu weist der von dem Wegaufnehmer 20 umschlossene Zuganker 10 an seinem Umfang als Ringe angedeutete Markierungen 24 auf, durch die während einer Bewegung der Trennwand 11 Signale in dem Wegaufnehmer 20 erzeugt werden. Das Sensorsystem kann als kapazitives, induktives-, optoelektrisches- oder magnetfeldsensitives Wegaufnehmersystem ausgebildet sein.

Den Signalen wird in dem nicht gezeigten elektronischen Steuergerät ein entsprechender axialer Betätigungsweg zugeordnet. Dieser axiale Betätigungsweg wird in einem Rechenmodul des Steuergerätes nach der Zeit differenziert und daraus die Betätigungsgeschwindigkeit ermittelt, wodurch mit einer erneuten Differenziation nach der Zeit auch die Betätigungsbeschleunigung ermittelbar ist.

Unter Verwendung dieser Signale ist das elektronische Steuergerät in der Lage, beim Überschreiten festgelegter und/oder variabler Schwellwerte, ein Auslösesignal für z.B. eine unterstützte Notbremsung zu erzeugen.

In entsprechender Weise wie zwischen der beweglichen Wand 11 und der Wand 21 ist an der beweglichen Wand 12 der Faltenbalg 18 mit einem kragenförmigen Anschlag 18a in einer Öffnung in der beweglichen Wand 12 befestigt. Der Faltenbalg 18 umgibt den Zuganker 10 jedoch nicht bis zur Wand 5a des Gehäuses 5. Vielmehr reicht der Faltenbalg 18 etwa bis zur Hälfte der axialen Erstreckung der Arbeitskammer 16 und weist an seinem freien Ende eine den Umfang des Zugankers 10 dicht umschließende Dichtlippe 18b auf.

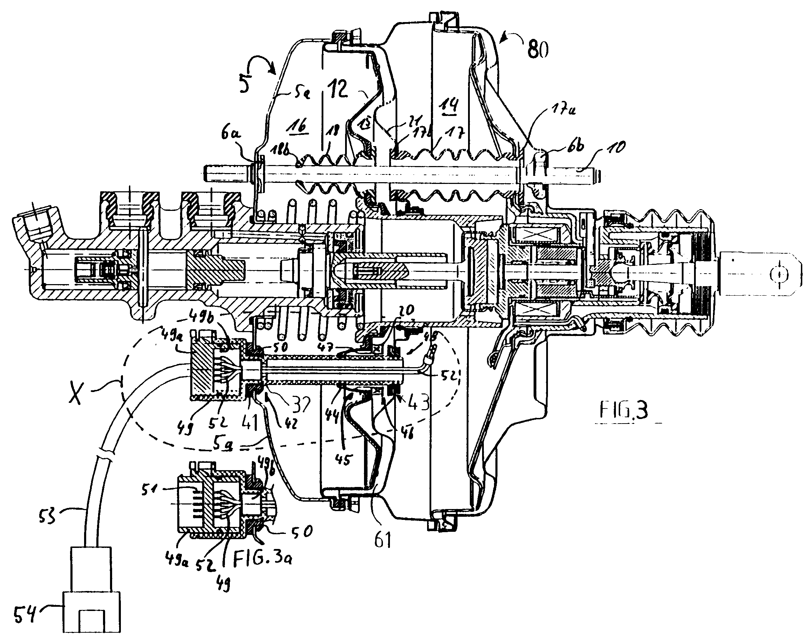

Der in Fig. 3 gezeigte Tandembremskraftverstärker entspricht im wesentlichen der in Fig. 1 gezeigten Ausführungsform. Daher sind übereinstimmende Teile mit gleichen Bezugszeichen versehen und nicht nochmals erläutert.

Anstelle der in an dem Zuganker 10 angebrachten Markierungen, die durch einen an der beweglichen Trennwand 11 angebrachten Wegaufnehmer erfaßt wird, erfaßt hier ein in einer Leitungsführung 32 angebrachter Wegaufnehmer 20 Markierungen 24, die bei einer Bewegung der beweglichen Trennwand 12 sich relativ zu dem Wegaufnehmer 20 bewegen.

Bei der in Fig. 3 gezeigten Ausführungsform der Leitungsführung sind keine Markierungen 24 vorhanden. Das heißt, daß die Leitungsführung 32 in der gezeigten und nachstehend beschriebenen Form auch ohne die Weiterbildung als Träger für den Wegaufnehmer, also nur als hermetische Leitungs- bzw. Kabeldurchführung einsetzbar ist.

Die Leitungsführung 32 ist durch eine rohrförmige Hülse gebildet, die mit einem Dichtungsgummi 41 in einer Öffnung 42 durch die Gehäusewand 5a in die Arbeitskammer 16 hineinragt. An ihrer Außenwand ist die Leitungsführung 32 von einer Dichtlippe 44 eines Dichtungselementes 45 luftdicht aber axial beweglich umschlossen. Das Dichtungselement 45 ist hier eine sich über die gesamte Fläche der beweglichen Trennwand 12 erstreckende Gummischeibe, deren Rand am Innenumfang des Gehäuses 5 axial beweglich eingespannt ist. Die Dichtlippe 44 ist an einem durch eine Öffnung 46 in der beweglichen Trennwand 12 ragenden rohrförmigen Ansatz 47 angeformt, der mit der übrigen Gummischeibe einstückig verbunden ist.

Das in das Innere des Bremskraftversatärkers reichende freie Ende der Leitungsführung 32 ist mittels einer Dichtungsmuffe 43 in einer Öffnung 48 in der feststehenden Trennwand 21 gehalten.

Das aus dem Gehäuse 5 des Bremskraftverstärkers herausragende Ende der Leitungsführung hat eine Aufnahme 49, in die Kabel für Sensoren und/oder Aktuatoren in dem Bremskraftverstärker reichen. Mit einer hermetischen Abdichtung 49a und 49b ist sichergestellt, daß der Unterdruck in der Kammer 16 bzw. der Kammer 14 durch die Leitungsführung 32 keine Verbindung zu Atmosphärendruck hat. Durch eine Dichtungsmuffe 50 ist die Leitungsführung 32 in der Gehäusewand 5a des Bremskraftverstärkers luftdicht aufgenommen.

Anstelle der z.B. vergossenen Abdichtung 49a in der Aufnahme 49 kann auch eine Stecker-Buchsenanordnung vorgesehen sein, wie sie in der Fig. 3a angedeutet ist. Hier ist die Aufnahme 49 durch einen im Längsschnitt etwa H-förmigen Einsatz gebildet, der Steckerstifte 51 trägt, die an ihrem dem Bremskraftverstärker zugewandten Ende Leitungen 52 aufweisen, die durch die Leitungsführung 32 in das Innere des Bremskraftverstärkers reichen.

Eine Leitung 53 hat an beiden Enden Steckverbinder, von denen der eine in die Aufnahme 49 einsteckbar ist und der andere Steckverbinder 54 zu dem nicht gezeigten elektronischen Steuergerät führt.

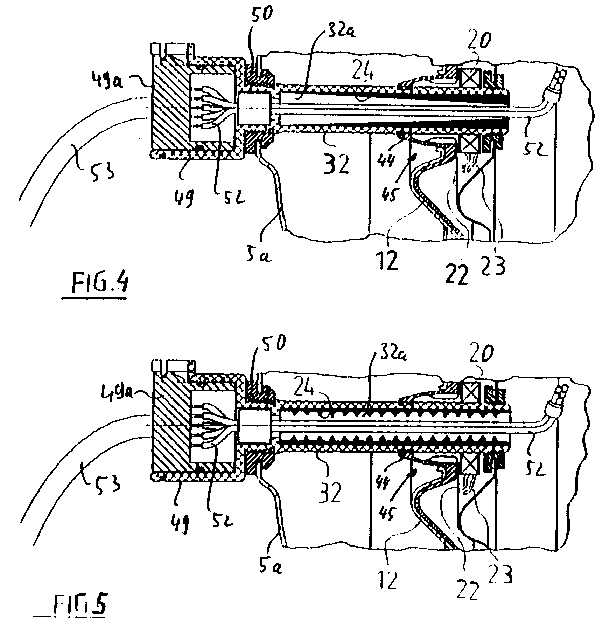

Einzelheiten und mögliche Ausgestaltungen des Wegaufnehmers 20 und der Markierungen 24 in der Leitungsführung 32 sind in den Fig. 4 und 5 veranschaulicht.

Die Markierung 24 kann die in Fig. 4 gezeigte Gestalt einer metallischen rohrförmigen Hülse haben, deren Wandstärke über ihre Länge zunimmt. Der Wegaufnehmer 20 ist ein Detektor, der ein Signal erzeugt, das für die Wandstärke charakteristisch ist.

Der in den Fig. 4 und 5 veranschaulichte Gedanke, die Markierung 24 in das Innere der Leitungsführung 32 zu verlegen, kann auch mit dem Zuganker 10 realisiert werden. Dies bedeutet, daß der Zuganker 10 als Hohlstab ausgeführt ist, wobei in dem Hohlraum sowohl die Markierung 24 (in Form von einem oder mehreren resistiven, kapazitiven oder induktiven Bauteilen) angeordnet ist und darüber hinaus alternativ auch noch die Leitungen verlegt sein können. In Abhängigkeit von dem Meßprinzip kann dabei der Zuganker den Hohlraum hermetisch abschließen. Dies bedeutet, daß das Meß-Prinzip so gewählt sein muß, daß eine berührungslose Abtastung der Markierung 24 möglich ist. Es ist jedoch auch möglich, den Zuganker 10 mit einem Längsschlitz zu versehen, durch den eine Abtasteinrichtung in den Hohlraum eingreifen kann.

In ähnlicher Weise kann die Markierung 24 die Gestalt metallischen rohrförmigen Hülse haben, die an ihrer Innenseite in regelmäßigen Abständen über ihre Länge ringförmige Verdickungen aufweist. Der Wegaufnehmer 20 ist ein Detektor, der diese Verdickungen erkennt und ein entsprechendes Signal erzeugt.

Um evt. entstandene Toleranzen auszugleichen, kann der Wegaufnehmer 20 auch auf der zylindrischen Leitungsführung geführt und über z.B. eine Mitnahmezunge, welche mit der beweglichen Trennwand 12 nur axial formschlüssig verbunden ist, bei einer Bewegung der Trennwand 12 mitgeschleppt werden.

Auch die Kabel 22, 23 können durch eine radiale Öffnung in die das Innere der Leitungsführung reichen und von dort aus mit dem elektronischen Steuergerät verbunden sein.

## Patentansprüche

1. Elektronisch regelbarer Bremskraftverstärker, der
- eine erste pneumatische Arbeitskammer (13) und
- eine zweite pneumatische Arbeitskammer (14) aufweist, die voneinander durch eine bewegliche Wand (11) getrennt sind, wobei
- ein Wegaufnehmer (20) zur Erfassung von Verschiebungen der beweglichen Wand (11) gegenüber einer ortsfesten Wand (5b) wenigstens einer der beiden Arbeitskammern (13, 14) vorgesehen ist, der eine Relativbewegung zwischen einem Meßglied (10) und dem Wegaufnehmer (20) in Bewegungsrichtung der beweglichen Wand (11) in ein zur Regelung des Bremskraftverstärkers herangezogenes Signal umwandelt, und wobei die bewegliche Wand (11) einen Durchlaß (19) aufweist, durch den das Meßglied (10) ragt, das mit der ortsfesten Wand (5b) fest verbunden ist und der Wegaufnehmer (20) den Durchlaß (19) und das durch diesen ragende Meßglied (10) zumindest teilweise umgibt, und wobei
- das Meßglied (10) Markierungen (24) aufweist, die bei Bewegungen der beweglichen Wand (11) von dem Wegaufnehmer (20) erfaßbar sind, oder
- das Meßglied (10) den Wegaufnehmer (20) trägt, und im Bereich des Durchlasses (19) Markierungen (24) vorgesehen sind, die bei Bewegungen der beweglichen Wand (11) von dem Wegaufnehmer (20) erfaßbar sind.

2. Elektronisch regelbarer Bremskraftverstärker nach Anspruch 1, dadurch gekennzeichnet, daß das Meßglied (10) durch einen Zuganker (10) gebildet ist, der zur Befestigung des Bremskraftverstärkers im Fahrzeug dient.

3. Elektronisch regelbarer Bremskraftverstärker nach Anspruch 1, dadurch gekennzeichnet, daß das Meßglied (10) durch eine Leitungsführung (32) gebildet ist, die zur Einleitung von Leitungen, vorzugsweise elektrischen Kabeln (52) in das Innere des Bremskraftverstärkers dient.

4. Elektronisch regelbarer Bremskraftverstärker nach einem der Ansprüche 2 oder 3, dadurch gekennzeichnet, daß der Zuganker (10) bzw. die Leitungsführung (32) zumindest abschnittsweise einen Hohlraum (32a) aufweisen, in dem Leitungen (52) für Sensoren oder Aktuatoren des Bremskraftverstärkers geführt sind.

5. Elektronisch regelbarer Bremskraftverstärker nach Anspruch 4, dadurch gekennzeichnet, daß die Durchtrittsstelle des Zugankers (10) bzw. der Leitungsführung (32) durch eine Gehäusewand (5a) des Bremskraftverstärkers in die Arbeitskammer (16) hermetisch abgedichtet sind.

6. Elektronisch regelbarer Bremskraftverstärker nach einem der vorhergehenden Ansprüche, dadurch gekennzeichnet, daß der Zuganker (10) bzw. die Leitungsführung (32) von einem Dichtungselement (17, 18) umgeben ist.

7. Elektronisch regelbarer Bremskraftverstärker nach einem der vorhergehenden Ansprüche, dadurch gekennzeichnet, daß die Leitungsführung (32) die durch den Wegaufnehmer (20) erfaßbarem Markierungen (24) an Innenwandung des Hohlraums (32a) aufweist.

8. Elektronisch regelbarer Bremskraftverstärker nach einem der vorhergehenden Ansprüche, dadurch gekennzeichnet, daß die Markierungen (24) so gestaltet sind, daß sie durch einen kapazitiven, induktiven, restistiven, optischen oder magnetfeldsensitiven Wegaufnehmer (20) erfaßbar sind.

9. Elektronisch regelbarer Bremskraftverstärker nach einem der vorhergehenden Ansprüche, dadurch gekennzeichnet, der Bremskraftverstärker als Tandembremskraftverstärker ausgebildet ist, bei dem der Zuganker (10) alle hintereinander angeordneten Arbeitskammern (13, 14, 15, 16) durchdringt und die beiden Arbeitskammern (13, 15) mit jeweils höherem Druckniveau durch einen den Zuganker (10) umgebenden Faltenbalg (17) pneumatisch miteinander verbunden sind, und der Wegaufnehmer (20) bei einer beweglichen Wand (11) angeordnet ist, der Markierungen (24) an dem Zuganker (10) erfaßt.

10. Fahrzeugbremsanlage, gekennzeichnet durch einen Bremskraftverstärker mit den Merkmalen gemäß einem oder mehreren der Ansprüche 1 bis 9.

## Claims

1. An electronically controllable brake servo unit with
- a first pneumatic working chamber (13) and
- a second pneumatic working chamber (14) which are separated from each other by a movable wall (11), wherein
- a travel sensor (20) is provided for the detection of displacements of the movable wall (11) relative to a stationary wall (5b) of at least one of the two working chambers (13, 14) which converts a relative movement between a measuring element (10) and the travel sensor (20) in the direction of the movement of the movable wall (11) into a signal used for controlling the brake servo unit, and wherein the movable wall (11) is provided with an opening (19) through which the measuring element (10) projects which is securely connected with the stationary wall (5b), and the travel sensor (20) at least partially surrounds the opening (19) and the measuring element (10) projecting through it, and wherein
- the measuring element (10) is provided with markings (24) which are detectable by the travel sensor (20) upon movements of the movable wall (11), or
- the measuring element (10) carries the travel sensor (20) and markings (24) are provided in the area of the opening (19) which can be detected by the travel sensor (20) upon movements of the movable wall (11).

2. An electronically controllable brake servo unit according to claim 1, characterized in that the measuring element (10) is formed by a tie bolt (10) which serves for securing the brake servo unit in the vehicle.

3. An electronically controllable brake servo unit according to Claim 1, characterized in that the measuring element (10) is formed by a cable carrier (32) which serves to introduce lines, preferably electrical cables (52), into the interior of the brake servo unit.

4. An electronically controllable brake servo unit according to one of Claims 2 or 3, characterized in that the tie bolt (10) or the cable carrier (32), respectively, at least partially comprise a hollow space (32a) into which lines (52) for sensors or actuators of the brake servo unit are routed.

5. An electronically controllable brake servo unit according to Claim 4, characterized in that the passage area of the tie bolt (10) or of the cable carrier (32), respectively, through a housing wall (5a) of the brake servo unit into the working chamber (16) is hermetically sealed.

6. An electronically controllable brake servo unit according to any of the previous Claims, characterized in that the tie bolt (10) or the cable carrier (32), respectively, is surrounded by a sealing element (17, 18).

7. An electronically controllable brake servo unit according to any of the previous Claims, characterized in that the cable carrier (32) is provided with the markings (24) detectable by the travel sensor (20) at the inner wall of the hollow space (32a).

8. An electronically controllable brake servo unit according to any of the previous Claims, characterized in that the markings (24) are so designed that they are detectable by a capacitive, inductive, resistive, optical or magnetic field sensitive travel sensor (20).

9. An electronically controllable brake servo unit according to any of the previous Claims, characterized in that the brake servo unit is designed as a tandem brake servo unit, where the tie bolt (10) penetrates all working chambers (13, 14, 15, 16) arranged one after the other and where the two working chambers (13, 15) with a higher pressure level each are pneumatically connected to each other by means of a bellows (17) surrounding the tie bolt (10) and the travel sensor (20) is arranged at a movable wall (11) and detects markings (24) on the tie bolt (10).

10. A vehicle braking system, characterized by a brake servo unit with the characteristics according to one or several of Claims 1 through 9.

## Revendications

1. Amplificateur de freinage réglable électroniquement présentant
- une première chambre de travail pneumatique (13) et
- une deuxième chambre de travail pneumatique (14) qui sont séparées l'une de l'autre par une paroi mobile (11), dans lequel
- un capteur de déplacement (20) est prévu pour relever les coulissements de la paroi mobile (11) par rapport à une paroi fixe (5b) d'au moins une des deux chambres de travail (13, 14), qui convertit un mouvement relatif entre un élément de mesure (10) et le capteur de déplacement (20) dans la direction de déplacement de la paroi mobile (11) en un signal auquel il est recouru pour la régulation de l'amplificateur de freinage, et dans lequel la paroi mobile (11) présente un passage (19) à travers lequel dépasse l'élément de mesure (10) qui est relié de façon fixe à la paroi fixe (5b) et le capteur de déplacement (20) entoure au moins partiellement le passage (19) et l'élément de mesure (10) qui dépasse à travers celui-ci, et dans lequel
- l'élément de mesure (10) présente des marques (24) qui peuvent être détectées par le capteur de déplacement (20) lors de déplacements de la paroi mobile (11), ou
- l'élément de mesure (10) porte le capteur de déplacement (20) et des marques (24) sont prévues dans la zone du passage (19), qui peuvent être détectées par le capteur de déplacement (20) lors de déplacements de la paroi mobile (11).

2. Amplificateur de freinage réglable électroniquement selon la revendication 1, caractérisé en ce que l'élément de mesure (10) est formé d'un tirant d'ancrage (10) qui sert à la fixation de l'amplificateur de freinage dans le véhicule.

3. Amplificateur de freinage réglable électroniquement selon la revendication 1, caractérisé en ce que l'élément de mesure (10) est formé d'un guide de lignes (32) qui sert à faire passer des lignes, de préférence des câbles électriques (52) à l'intérieur de l'amplificateur de freinage.

4. Amplificateur de freinage réglable électroniquement selon l'une des revendications 2 ou 3, caractérisé en ce que le tirant d'ancrage (10) respectivement le guide de lignes (32) présentent au moins par secteur une cavité (32a) dans laquelle passent des lignes (52) pour des capteurs ou des actionneurs de l'amplificateur de freinage.

5. Amplificateur de freinage réglable électroniquement selon la revendication 4, caractérisé en ce que l'endroit où le tirant d'ancrage (10) respectivement le guide de lignes (32) traverse une paroi (5a) du boîtier de l'amplificateur de freinage pour pénétrer dans la chambre de travail (16) est hermétiquement bouché.

6. Amplificateur de freinage réglable électroniquement selon l'une quelconque des revendications précédentes, caractérisé en ce que le tirant d'ancrage (10) respectivement le guide de lignes (32) est entouré d'un élément d'étanchéité (17, 18).

7. Amplificateur de freinage réglable électroniquement selon l'une quelconque des revendications précédentes, caractérisé en ce que le guide de lignes (32) présente les marques (24) pouvant être détectées par le capteur de déplacement (20) sur la paroi intérieure de la cavité (32a).

8. Amplificateur de freinage réglable électroniquement selon l'une quelconque des revendications précédentes, caractérisé en ce que les marques (24) sont réalisées de façon à pouvoir être détectées par un capteur de déplacement (20) capacitif, inductif, résistif, optique ou sensible au champ magnétique.

9. Amplificateur de freinage réglable électroniquement selon l'une quelconque des revendications précédentes, caractérisé en ce que l'amplificateur de freinage est un amplificateur de freinage tandem dans lequel le tirant d'ancrage (10) traverse toutes les chambres de travail (13, 14, 15, 16) disposées l'une derrière l'autre et les deux chambres de travail (13, 15) ayant respectivement le niveau de pression le plus élevé sont reliées entre elles pneumatiquement par l'intermédiaire d'un soufflet (17) entourant le tirant d'ancrage (10) et le capteur de déplacement (20) qui détecte les marques (24) sur le tirant d'ancrage (10) est disposé sur une paroi mobile (11).

10. Installation de freinage de véhicule caractérisée par un amplificateur de freinage ayant les caractéristiques selon l'une ou plusieurs des revendications 1 à 9.
